Europäisches Patentamt

European Patent Office

Office européen des brevets

(19)

(11) Veröffentlichungsnummer : **0 362 517 B1**

(12) **EUROPÄISCHE PATENTSCHRIFT**

(45) Veröffentlichungstag der Patentschrift :
**15.01.92 Patentblatt 92/03**

(51) Int. Cl.⁵ : **B60T 8/18,** B62B 5/04,
F16D 59/02, F16D 49/16,
B66F 9/075

(21) Anmeldenummer : **89114691.2**

(22) Anmeldetag : **09.08.89**

(54) **Fahrzeugbremse für Hublader.**

(30) Priorität : **03.10.88 DE 3833571**

(43) Veröffentlichungstag der Anmeldung :
**11.04.90 Patentblatt 90/15**

(45) Bekanntmachung des Hinweises auf die
Patenterteilung :
**15.01.92 Patentblatt 92/03**

(84) Benannte Vertragsstaaten :
**DE FR GB IT**

(56) Entgegenhaltungen :
**DE-A- 1 530 497
DE-A- 3 106 027
FR-A- 1 131 564
GB-A- 933 303**

(56) Entgegenhaltungen :
**US-A- 2 687 190
US-A- 3 080 019
US-A- 3 276 787
US-A- 3 373 620**

(73) Patentinhaber : **Jungheinrich
Aktiengesellschaft
Friedrich-Ebert-Damm 129
W-2000 Hamburg 70 (DE)**

(72) Erfinder : **Uwe, John, Dipl.-Ing.
Schwalbenweg 12
W-2061 Nahe (DE)**

(74) Vertreter : **Dipl.-Ing. H. Hauck, Dipl.-Ing. E.
Graalfs, Dipl.-Ing. W. Wehnert, Dr.-Ing. W.
Döring
Neuer Wall 41
W-2000 Hamburg 36 (DE)**

## Beschreibung

Die Erfindung betrifft eine Fahrzeugbremse für Hublader mit wenigstens einem druckmittelbetriebenen Hubzylinder, welche Bremse mechanisch vermittels einer Feder an eine Bremsscheibe anpreßbare Bremsbacken aufweist, welche durch Spreizung entgegen der Feder belüftet werden können.

In einer speziellen Ausführung ist die Feder an einem Verbindungsstift zwischen Ansätzen an schwenkbar gelagerten Bremsbacken angeordnet.

Dabei wird einbezogen, daß der Verbindungsstift zwei Ansätze der Bremsbacken, zwischen denen ein drehbarer Nocken angeordnet ist, durchsetzt und an einem Ende des Verbindungsstiftes ein Federwiderlager für eine Feder angeordnet ist, die sich andererseits an der Außenseite eines Ansatzes einer Bremsbacke abstützt.

Eine solche Bremse ist für Deichselhubwagen aus der DE-P 1118423 bekannt. Diese mechanische Ausführung hat sich bewährt. Sie hat aber den Nachteil, daß die Feder immer in gleicher Größe einwirkt. Die Bremswirkung ist bei einem unbeladenen Fahrzeug genauso groß wie bei einem volle Last tragenden Gerät. Das führt dazu, daß in unbelastetem Zustand die Bremse sehr stark einfällt, weil die Bremse so eingestellt werden muß, daß vorgeschriebene Werte bei Voll-Last eingehalten werden. Die harte Abbremsung des unbelasteten Fahrzeuges führt zu stoßartigen Fahrzeugbeanspruchungen. Diese sind sowohl bei einem fahrergesteuerten Fahrzeug als auch bei einem fahrerlos geführten Fahrzeug nachteilig, weil einerseits für den Fahrer die ruckartigen Bewegungen unangenehm sind und zu starker Beanspruchung führen, aber auch bei einem fahrerlos geführten Fahrzeug Ungenauigkeit in der Ausrichtung zu einer Leitlinie herbeiführen können, abgesehen davon, daß das Material unnötig stark beansprucht wird.

Aus Vorstehendem ergibt sich, daß die Erfindung nicht auf einen Deichselhubwagen nach der oben genannten DE-P 1118423 beschränkt ist, sondern daß auch andere Hubfahrzeuge, auch deichsellose Hubfahrzeuge, einbezogen werden.

In diesem Zusammenhang wird darauf hingewiesen, daß an vielen Fahrzeugen auch eine Totmann-Bremse bekannt ist, die sich bei Freigabe eines Gestänges automatisch anlegt. Auch bei solchen Bremsen tritt das Problem der angemessenen Bremsanlegung auf, um Beschädigungen zu vermeiden. Es kommt darauf an, daß eine angemessene Bremsanlegung in jedem Belastungszustand des Fahrzeuges erreicht werden muß.

Aus der DE-P 3106027 ist eine lastabhängig beaufschlagbare Zylinderkolbeneinrichtung in bezug zu einer Feder bekannt. Diese betrifft aber nur einen höhenausgleichbaren Radnabenantrieb gegenüber dem Fahrgestell eines Hubladers. Die Anordnung ist zwischen dem Fahrgestell und dem Radnabenantrieb vorhanden, um dieses zu beeinflussen. Dabei werden Radanpreßdrücke verändert und Kippneugungen eines Fahrzeuges vermindert. Dieses kann auch dazu führen, daß sich die Geschwindigkeit in einer Kurvenfahrt erhöht.

Aus der DE-OS 2203263 ist es auch bekannt, zur lastabhängigen Beeinflussung der Bremskraft bei Gabelstaplern den Druck in Hubzylinder zu nutzen. Hierbei handelt es sich aber um eine hydraulische Bremsanlage mit Geräten wie Bremskraftbegrenzer, Bremskraftregler oder Bremskraftverteiler. In der bekannten Ausführung wird nun dem Bremskraftverteiler eine Einstellung aus einer Verbindung mit dem Hubzylinder überlagert. Dieses nutzt den Innendruck im Hubzylinder durch automatischen Abzweig aus.

Bei einer mechanischen Bremse der oben angegebenen Art ist das nicht möglich.

Der Erfindung liegt die Aufgabe zugrunde, die eingangs angegebene Bremsenausführung so auszugestalten, daß die mechanisch wirkende Bremse anpaßbar ist.

Diese Aufgabe wird erfindungsgemäß dadurch gelöst, daß das eine Federwiderlager lastabhängig abgestützt wird, daß die Lastabhängigkeit der Abstützung vom Druckmitteldruck im Hubzylinder bewirkt wird und daß bei zunehmender Last die Spannung der Feder erhöht wird.

Dieses ist sowohl bei deichselgeführten als auch bei fahrerlosen Fahrzeugen und Fahrzeugen mit einem Fahrer von erheblicher Bedeutung, weil in jedem Fall die Bremskraft nicht durch einen Fahrer aufgebracht wird, sondern nur die Bremsanlegung, wenn ein Fahrer vorhanden ist, freigegeben wird, wobei es wesentlich ist, daß diese Bremskraft in Abhängigkeit von dem jeweiligen Belastungszustand des Fahrzeuges eingesetzt wird.

In der Ausführung mit dem Verbindungsstift zwischen Ansätzen an schwenkbar gelagerten Bremsbacken liegt eine vorteilhafte Ausgestaltung darin, daß ein Ende des Verbindungsstiftes als Kolbenstange mit einem Kolben in einer Zylinderkolbenvorrichtung an einem Ansatz verbunden ist und der Zylinderraum unter dem Kolben mit dem Druckraum des Hubzylinders verbunden ist.

Im Zusammenhang mit dem Verbindungsstift, auch gemäß einleitenden Bemerkungen, entsprechend denen eine drehbarer Nocken zwischen zwei Ansätzen angeordnet ist, durchsetzt der Verbindungsstift die Ansätze und an einem Ende des Verbindungsstiftes ist ein Federwiderlager für eine Feder angeordnet, die sich andererseits an der Außenseite eines Ansatzes einer Bremsbacke abstützt. Dabei liegt eine besonders bevorzugte Ausführungsform darin, daß das andere Ende des Verbindungsstiftes an der Außenseite des Ansatzes

2

der anderen Bremsbacke mit dem Kolben verbunden ist, dessen Zylinder an der Außenseite des Ansatzes der anderen Bremsbacke angeordnet ist, wobei Durchgangsöffnungen durch die Ansätze der Bremsbacken mit Spiel zum Verbindungsstift ausgeführt sind.

Hierdurch ergibt sich eine überraschend einfache Ausführung, die im übrigen auch durch den Aufbau jeweils leicht zugängliche Teile hat, so daß Wartungen und Anpassungen ermöglicht werden. Anpassungen können dadurch vorgenommen werden, daß das Federwiderlager in bezug zum Stift verändert wird oder daß auch in der Verbindungsleitung zu der Zylinderkolbeneinrichtung Drosseln eingestellt werden, so daß Verzögerungen in der Anpassung entstehen, wenn Belastungsstöße auftreten sollten. Vor allem ist es aber auch möglich, die Zylinderkolbeneinrichtung gegen eine andere mit anderem Durchmesser auszuwechseln.

Ein besonderes Merkmal der Erfindung besteht darin, daß an beiden Ansätzen der Bremsbacken Öffnungen verschiedener Größe angeordnet sind und insbesondere die Öffnung an dem Ansatz der Bremsbacke, in welchem sich die Feder abstützt, in Längsrichtung des Ansatzes größer ist als am anderen Ansatz, weil auch in dieser Öffnung der Verbindungsstift verschwenkt wird.

Die Erfindung schafft mit den beschriebenen Merkmalen eine besonders vorteilhafte Totmann-Bremse mit einer sich belastungsabhängig ändernden Bremskraft. Dieses ist gerade für eine Totmann-Bremse wesentlich, weil eine bestimmte Bremskraft, die mechanisch aufgebracht wird, immer auch bei Beschädigungen im hydraulischen Kreis aufrechterhalten bleibt, so daß die Sicherheit gewährleistet ist, während im normalen Betrieb jeweils eine angemessene Bremsung sichergestellt ist.

Es versteht sich, daß der Nocken an einem Deichselfahrzeug durch die Schwenkstellung der Deichsel in vertikaler Richtung einstellbar ist. Besonders bevorzugt wird, daß der Nocken durch ein mechanisches Gestänge betätigbar ist. Dabei ist vorteilhaft das Gestänge gegen die Feder vom Fahrer betätigbar, um den Nocken in einer die Bremsbacken abhhebenden Drehstellung zu halten und bei Freigabe des Gestänges ist der Nocken unter der Einwirkung der Feder in eine Stellung zurückbewegbar, in der die Bremse angelegt ist. Es wird nicht ausgeschlossen, für das Gestänge eine eigene Feder einzusetzen. Ein besonderer Vorteil liegt dabei darin, daß die die Bremskraft aufbringende Feder zugleich die Rückstellung des Gestänges bewirken kann.

Die Erfindung wird im folgenden anhand eines Ausführungsbeispieles erläutert, das in der Zeichnung dargestellt ist. In der Zeichnung zeigen :

Fig. 1      eine Seitenansicht eines Deichselhubfahrzeuges in schematischer Darstellung ;
Fig. 2      ein schematisches Schaubild für die Lasthubeinrichtung dieses Hubfahrzeuges in Verbindung mit einer Bremse.

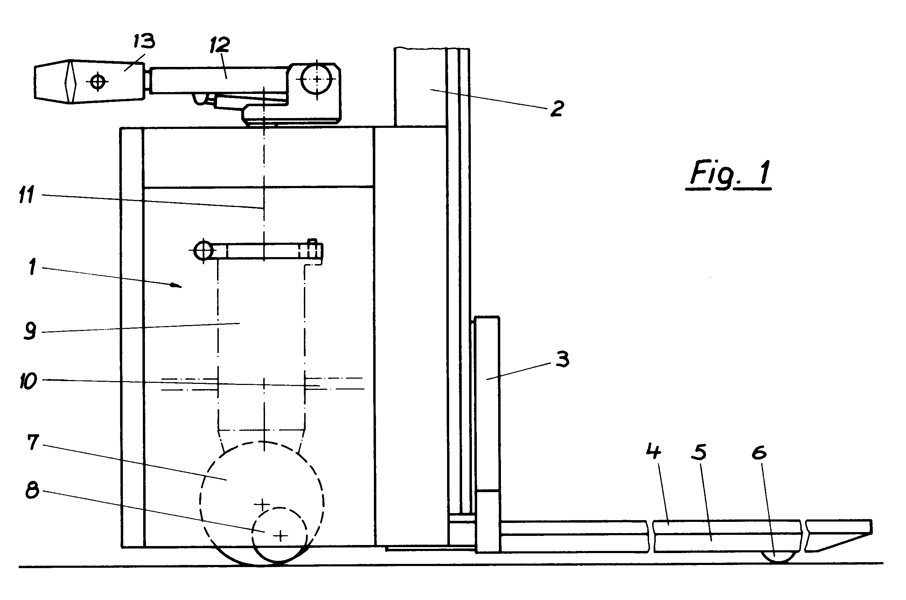

Das Hubfahrzeug nach Fig. 1 hat ein Fahrgestell 1, an welchem ein Hubmast 2 angeordnet ist. An diesem Hubmast ist ein Lastträgerschlitten 3 höhenbeweglich geführt. An diesem Schlitten 3 sind Gabelarme 4 angeordnet. Ferner sind am Fahrgestell Fahrstreben 5 mit Lastrollen 6 vorgesehen, und zwar unter den Gabelarmen 4. Diese sind in ihrer untersten Stellung mit einem nach unten offenen U-förmigen Profil auf die Fahrstreben aufsetzbar.

Am Fahrgestell 1 ist in der Mitte ein lenkbares Antriebsrad 7 zwischen Stütz-Nachlaufrollen 8 angeordnet. Das Antriebsaggregat 9 für das Antriebsrad 7 ist vermittels einer Abstützung 10 im Fahrgestell drehbar gelagert und steht über ein Gestänge 11 mit einer Deichsel 12 in Verbindung, welche einen Handgriff 13 zugleich als Steuerkopf aufweist.

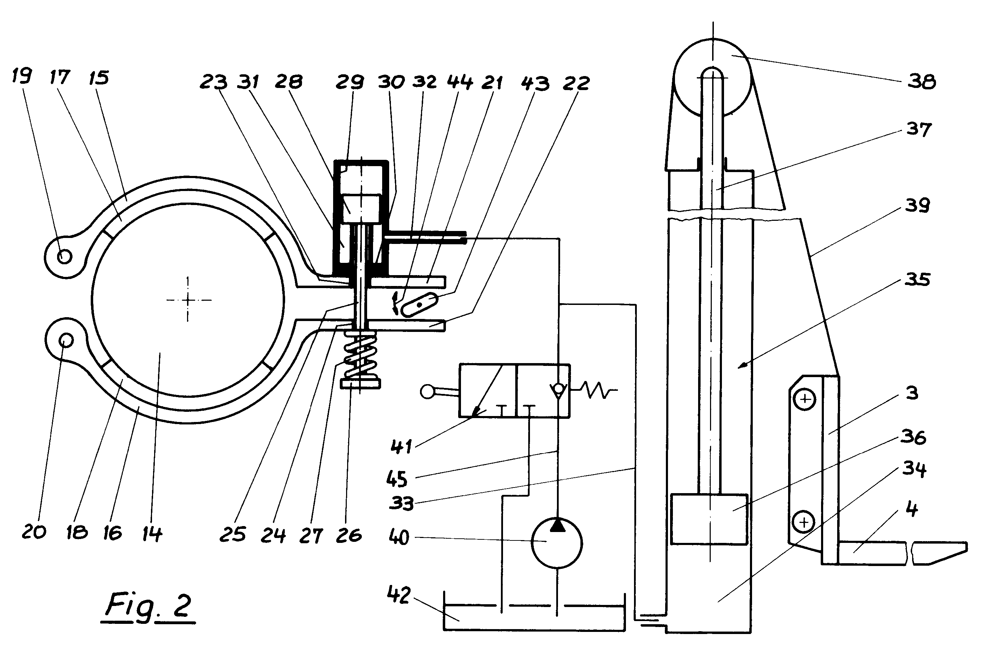

An dem Antriebsrad 7 befindet sich eine Bremsscheibe, die in Fig. 2 dargestellt und mit 14 bezeichnet ist. Die Bremsscheibe 14 kann auch eine Bremstrommel sein. Auf ihr sind zwei Bremsbacken 15, 16 mit Bremsbelägen 17, 18 angeordnet, welche an einem Ende um Zapfen 19, 20, die im Fahrgestell 1 bzw. am Antriebsaggregat 9 angeordnet sind, verschwenkbar gelagert sind. An den anderen Enden haben die Bremsbacken 15, 16 abstehende Ansätze 21, 22. Diese haben mit Abstand von ihren Enden Öffnungen 23, 24, durch welche ein Verbindungsstift 25 mit Spiel geführt ist, so daß eine Änderung der Winkeleinstellung in beschränktem Maße leicht möglich ist.

Dieser Verbindungsstift hat an einem Ende mit Abstand von der Außenseite des Ansatzes 22 ein Federwiderlager 26. Unter diesem ist eine Feder 27 abgestützt, deren anderes Ende, gegebenenfalls über eine Unterlegscheibe, am Ansatz 22 abgestützt ist. Diese Feder, eine Druckfeder, bringt, wenn sie freigegeben ist, die Bremskraft auf, um die Bremsbacken 15, 16 zusammenzudrücken.

Das andere Ende des Verbindungsstiftes 25 ist als Kolbenstange mit einem Kolben 28 verbunden, welcher in einem Zylinder 29 geführt ist, der auf der Außenseite des Ansatzes 21 angeordnet ist. Die Einführung des Verbindungsstiftes 25 bzw. seines Abschnittes als Kolbenstange bei 30 in den Zylinder 29 ist abgedichtet, so daß unter dem Kolben 28 ein abgedichteter Zylinderraum 31 vorhanden ist. In diesem Bereich mündet eine Anschlußleitung 32, welche über die abgezweigte Verbindungsleitung 33 mit dem lastabhängig beaufschlagten Druckraum 34 des Hubzylinders 35 in Verbindung steht. Es ist ersichtlich, daß der Kolben 36 dieser Hub-Zylinderkolbeneinrichtung mit einer nach oben herausgeführten Kolbenstange 37 in Verbindung steht, an welcher über eine Umlenkrolle 38 ein Seilzug oder eine Kette 39 geführt ist, die mit dem Lastträgerschlitten 3 in Verbindung steht, an welchem die Gabelarme 4 angeordnet sind.

Fig. 2 zeigt, daß die Verbindung 32, 33 ständig vorhanden ist. Die die Hub-Zylinderkolbeneinrichtung 35 speisende Pumpe 40 wirkt sowohl in die Anschlußleitung 32 als auch die Verbindungsleitung 33. In dem Leitungsabschnitt 45 ist ein bekanntes Steuergerät 41 eingeschaltet, durch welches der Druckanschluß in der beschriebenen Weise oder ein Rücklaufanschluß in den Tank 42 herstellbar ist.

Der Zylinder 29 ist vorteilhaft lösbar auf dem Ansatz 21 angeordnet, so daß unter gleichzeitiger Auswechselung des Kolbens 28 auch eine Anpassung möglich ist.

Bei der Anordnung des Zylinders 29 auf dem Ansatz 21 ergibt sich aufgrund der festen Anordnung der Kolbenstange 25 in Form des Verbindungsstiftes am Kolben 28, daß dort die Durchgangsöffnung am Ansatz eng sein kann, aber auch zugleich, daß aufgrund des Spreizungswinkels zwischen den beiden Ansätzen 21 und 22 die Öffnung im Ansatz 22 langgestreckt ausgeführt sein muß, damit die Verschwenkung der Kolbenstange und damit des Verbindungsstiftes rechtwinklig zum Ansatz 21 aufgenommen werden kann.

Zwischen den Ansätzen 21, 22 der Bremsbacken 15 befindet sich ein Einstellnocken 43, der in Richtung des Doppelpfeiles 44 verstellbar ist, und zwar beispielsweise bei einem Fahrzeug nach Fig. 1 durch eine Schwenkbewegung der Deichsel 12 oder in einer anderen Ausführungsform des Fahrzeuges durch ein Gestänge, das entweder von einem Fahrer gehalten wird oder aber auch bei einem fahrerlosen Fahrzeug durch eine Befehlseingabe an der Fahrstrecke.

In der gezeigten Stellung kann die Feder 27 ihre volle Kraft zur Bremsausübung aufbringen. Wenn der Nocken 43 entgegen dem Uhrzeigersinn um seine Mittelachse verdreht wird, z.B. aufgrund einer Betätigung des erwähnten Gestänges, dann ist erkennbar, daß die Ansätze 21, 22 gegen die Kraft der Feder 27 gespreizt werden und die Bremsbeläge 17, 18 von der Bremsscheibe 14 abgehoben werden.

## Patentansprüche

1. Fahrzeugbremse für Hublader mit wenigstens einem druckmittelbetriebenen Hubzylinder, welche Bremse mechanisch vermittels einer Feder an eine Bremsscheibe anpreßbare Bremsbacken aufweist, welche durch Spreizung entgegen der Feder gelüftet werden können, dadurch gekennzeichnet, daß das eine Federwiderlager (26) lastabhängig abgestützt wird, daß die Lastabhängigkeit der Abstützung vom Druckmitteldruck im Hubzylinder (35) bewirkt wird und daß bei zunehmender Last die Spannung der Feder (27) erhöht wird.

2. Fahrzeugbremse nach Anspruch 1, bei welcher die Feder an einem Verbindungsstift zwischen Ansätzen an schwenkbar gelagerten Bremsbacken angeordnet ist, dadurch gekennzeichnet, daß ein Ende des Verbindungsstiftes (25) als Kolbenstange mit einem Kolben (28) in einer Zylinderkolbenvorrichtung (28, 29) verbunden ist und der Zylinderraum (31) unter dem Kolben (28) mit dem Druckraum (34) des Hubzylinders (35) verbunden ist.

3. Fahrzeugbremse nach Anspruch 2, bei welcher der Verbindungsstift zwei Ansätze der Bremsbacken, zwischen denen ein drehbarer Nocken angeordnet ist, durchsetzt und an einem Ende des Verbindungsstiftes ein Federwiderlager für eine Feder angeordnet ist, die sich andererseits an der Außenseite eines Ansatzes einer Bremsbacke abstützt, dadurch gekennzeichnet, daß das andere Ende des Verbindungsstiftes (25) an der Außenseite des Ansatzes (21) der anderen Bremsbacke (15) mit dem Kolben (28) verbunden ist, dessen Zylinder (29) an der Außenseite des Ansatzes (21) der anderen Bremsbacke (15) angeordnet ist, wobei Durchgangsöffnungen (23, 24) durch die Ansätze (21, 22) der Bremsbacken mit Spiel zum Verbindungsstift (25) ausgeführt sind.

4. Fahrzeugbremse nach Anspruch 3, dadurch gekennzeichnet, daß die Öffnung (24) für den Verbindungsstift (25) langgestreckt und in Längsrichtung des Ansatzes (22) mit dem Federwiderlager länger als die Durchgangsöffnung (23) ausgeführt ist.

5. Fahrzeugbremse nach einem der Ansprüche 1 bis 4, gekennzeichnet durch eine mechanische, als Totmann-Bremse ausgeführte Bremse.

6. Fahrzeugbremse nach einem der Ansprüche 3, 4 oder 5, dadurch gekennzeichnet, daß der Nocken (43) an einem Deichselfahrzeug durch die Schwenkstellung der Deichsel (12) in vertikaler Richtung einstellbar ist.

7. Fahrzeugbremse nach einem der Ansprüche 3, 4 oder 5, dadurch gekennzeichnet, daß der Nocken (43) durch ein mechanisches Gestänge betätigbar ist.

8. Fahrzeugbremse nach Anspruch 7, dadurch gekennzeichnet, daß das Gestänge gegen die Feder (25) vom Fahrer betätigbar ist, um den Nocken (43) in einer die Bremsbacken (15, 16) abhebenden Drehstellung zu halten und daß bei Freigabe des Gestänges der Nocken (43) unter Einwirkung der Feder (25) in eine Stellung zurückbewegbar ist, in der die Bremse angelegt ist.

## Claims

1. A vehicle brake for a lifting lorry including at least a fluid actuaten lifting cylinder, said brake comprising brake shoes to be mechanically pressed against a brake disk by a spring and to be released by a spreading action against said spring, characterized in that the one spring bearing (26) is supported under the control of the load, that the load control of the support is effected by the fluid pressure in said lifting cylinder (35) and that the tension of the spring (27) is increased when the load increases.

2. The vehicle brake of claim 1, in which the spring is provided on a connecting shaft between extensions of pivotally supported brake shoes, characterized in that the one end of the connecting shaft (25) is fixed as a piston rod to a piston (28) in a fluid actuated cylinder means (28, 29) and that the cylinder chamber (31) below the piston (28) is connected to the pressure chamber (34) of the lifting cylinder (35).

3. The vehicle brake of claim 2, in which the connecting shaft extends through a pair of extensions of the brake shoes, between which extensions a rotatable cam is provided and in which the one end of the connecting shaft is provided with a spring bearing, the other end thereof being supported on the outer side of an extension of a brake shoe, characterized in that the other end of the connecting shaft (25) is fixed to the piston (28) at the outer side of the extension (21) of the other brake shoe (15), that the cylinder means (29) of the piston (28) is disposed at the outer side of the extension (21) of the other brake shoe (15) and that a play is provided between the openings (23, 24) in said extensions (21, 22) of the brake shoes and the connecting shaft (25).

4. The vehicle brake of claim 3, characterized in that the opening (24) for the connecting shaft (25) is elon.-gated and longer than the opening (23) in the longitudinal direction of the extension (22) associated with the spring bearing.

5. The vehicle brake of one of claims 1 to 4, characterized by a mechanical brake which is defined to be a deadman brake.

6. The vehicle brake of one of claims 3, 4 or 5,. characterized in that the cam (43) is adjustable by the vertical pivotal position of the control bar (12) of a draw bar vehicle.

7. The vehicle brake of one of claims 3, 4 or 5, characterized in that the cam (43) is actuated by a mechanical linkage.

8. The vehicle brake of claim 7, characterized in that the linkage is actuated by an operator against the spring (25) to maintain the cam (43) in a rotational position in which the brake shoes (15, 16) are released and that the cam (43) returns to a position due to the force of the spring (25) in which position the brake is applied when the linkage is released.

## Revendications

1. Frein de véhicule pour chariot élévateur comportant au moins un vérin de levage actionné par un fluide sous pression, ce frein comprenant des mâchoires de frein qui peuvent être appliquées mécaniquement contre un disque de frein au moyen d'un ressort, ces mâchoires pouvant écartées en surmontant la force exercée par le ressort, caractérisé en ce qu'un contre-appui de ressort (26) subit un effort d'appui fonction de la charge, en ce que la relation de dépendance entre l'effort d'appui et la charge est commandée par la pression de fluide dans le vérin de levage (35) et en ce que, lorsque la charge augmente, le serrage du ressort (27) s'accroît.

2. Frein de véhicule suivant la revendication 1, dans lequel le ressort est disposé sur une tige de liaison entre des prolongements des mâchoires de frein montées pivotantes, caractérisé en ce qu'une extrémité de la tige de liaison (25) est reliée au piston (28) d'un ensemble piston-cylindre (28, 29) en formant la tige de piston et que la chambre (31) du cylindre située sous le piston (28) est reliée à la chambre sous pression (34) du vérin de levage (35).

3. Frein de véhicule suivant la revendication 2, dans lequel la tige de liaison (25) traverse deux prolongements des mâchoires de frein, entre lesquels est disposée une came tournante (43) et, à l'une des extrémités de l'axe de liaison (25), est disposé un contre-appui pour un ressort qui s'appuie, de l'autre côté, sur la face extérieure d'un prolongement d'une mâchoire de frein, caractérisé en ce que l'autre extrémité de l'axe de liaison (25) est reliée, sur la face extérieure du prolongement (21) de l'autre mâchoire de frein (15), au piston (28), dont le cylindre (29) est disposé sur la face extérieure du prolongement (21) de l'autre mâchoires de frein (15), des ouvertures (23, 24) étant exécutées au travers des prolongements (21, 22) des mâchoires de frein (15), pour le passage avec jeu de la tige de liaison (25).

4. Frein de véhicule suivant la revendication 3, caractérisé en ce que l'ouverture (24) pour la tige de liaison (25) prévue dans le prolongement (22) comportant le contre-appui du ressort est allongée, dans la direction longitudinale de ce prolongement, et est plus longue que l'autre ouverture de passage (23).

5. Frein de véhicule suivant l'une quelconque des revendications 1 à 4, caractérisé par un frein mécanique, réalisé sous la forme d'un frein à dispositif d'homme -mort.

6. Frein de véhicule suivant l'une quelconque des revendications 3, 4 ou 5, caractérisé en ce que la came (43) peut être commandée, sur un véhicule à timon, par le pivotement de ce timon (12) suivant la direction verticale.

7. Frein de véhicule suivant l'une quelconque des revendications 3, 4 ou 5, caractérisé en ce que la came (43) peut être actionnée par une tringlerie mécanique.

8. Frein de véhicule suivant la revendication 7, caractérisé en ce que la barre peut être actionnée par le conducteur en agissant contre le ressort (25), pour maintenir la came (43) dans une position de rotation relâchant les mâchoires de frein (15, 16) et en ce qu'en libérant la barre, la came (43) peut revenir en arrière, sous l'action du ressort (25), dans une position dans laquelle le frein est serré.

Fig. 1

_Fig. 2_

19 17 15    23 31 28    29 30 32 44 21 43 22    38

20 18 16 14    25 24 27 26    41    45    33    40    42    37    39    35    3    36    34    4

EP 0 362 517 B1